# EUROPEAN PATENT SPECIFICATION

(11) **EP 1 145 158 B1**
(45) Date of publication and mention of the grant of the patent: **28.05.2003**
(21) Application number: 00906568.1
(22) Date of filing: 25.01.2000
(51) Int. Cl.: G06F 17/40

(54) **SYSTEM FOR DATA CAPTURE, NORMALIZATION, DATA EVENT PROCESSING, COMMUNICATION AND OPERATOR INTERFACE**
SYSTEM ZUM ERFASSEN VON DATEN, ZUM NORMALISIEREN, ZUM VERARBEITEN VON EREIGNISSEN UND ZUM KOMMUNIZIEREN UND BEDIENERSCHNITTSTELLE
SYSTEME D'ACQUISITION DE DONNEES, DE NORMALISATION, DE TRAITEMENT D'EVENEMENTS DE DONNEES, DE COMMUNICATION ET INTERFACE D'OPERATEUR

(30) Priority: 27.01.1999 US 237931; 21.05.1999 US 316220
(43) Date of publication of application: 17.10.2001
(73) Proprietor: On Guard Plus Limited, Farnham, Surrey GU10 3AB (GB)
(72) Inventor: GRINTER, Richard, C., Arlington, TX 76017 (US); ALVAREZ, David, Plano, TX 75074 (US)
(74) Representative: Prato, Roberto
(86) International application number: IB0000270
(87) International publication number: WO00045308

(56) References cited:
- EP-A- 0 575 753
- US-A- 4 730 183
- US-A- 5 794 009
- US-A- 5 862 325

## Description

### BACKGROUND OF THE INVENTION

The present invention relates to automated systems for monitoring real-time events for anomalies, recurring events, specified activities, and the like. More specifically, the present invention relates to a data capture, normalization, and communication system for acquiring information from a plurality of sources distributed throughout a system, normalizing this acquired data into a standard format, and communicating said normalized data to an independent data consumer system.

The present invention also relates to data processing systems that act as a data consumer by receiving normalized data from a data producer that collects data from a plurality of sources distributed throughout a system. Upon receipt of a normalized data stream, the data processing system of the current invention processes this data according to preset, definable rules, determining if the collected data satisfies or violates the parameters of these rules. If these rules have been violated the data processing system executes an appropriate response which can be directed to either or both the data producer (data capture system) or an independent operator interface system.

The present invention also relates to an operator interface system that manages information displays by acting as a data consumer of incident information concerning monitoring events gathered from a plurality of sources distributed throughout a system.

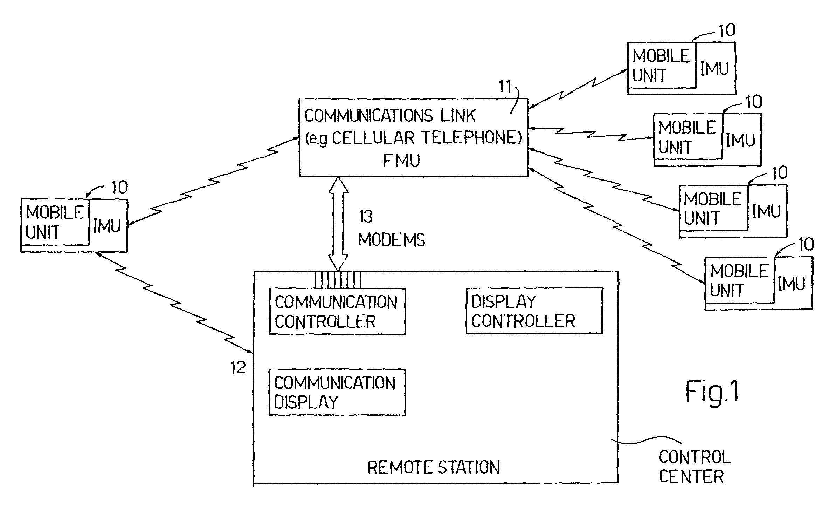

Electronic monitoring and location detection systems are known in the art, Figure 1. These systems mostly employ an individual monitoring unit (IMU) or mobile unit 10 which collects event data and uses a transmitter, attached to a person or item to be kept track of, to forward this data. Some IMUs perform local analysis and accumulation of event data prior to forwarding, e.g., measurement of breath alcohol level. Then, as illustrated in Figure 1, such mobile units 10 emit a radio signal containing the collected event data stream to be received directly by a remote station 12 or by a field monitoring unit (FMU) 11 which then relays the data to a remote station 13. Patent 5,333,152 to Wilber discloses an apparatus that establishes such a communication link upon activation by either the IMU or the FMU, with unit identification, event identification, and time stamping included in the transmitted data stream. Inclusion of unique identifying information for the IMU is disclosed in U.S. Pat. No. 5,189,395, issued to Mitchell. The event stream is treated as a transaction in U.S. Pat. No. 5,319,710, issued to Atalla, wherein a remote station monitors each transaction for completion, i.e., monitors each event stream for completion, through the use of an encryption scheme which includes both the IMU's and the transaction's unique identification numbers.

Both U.S. Pat. No. 5,189,395 and 5,319,710 teach a remote station whose processing of the event data stream includes searching for alarm conditions associated with the particular IMU which collected the data. When an alarm condition is detected, the remote station takes appropriate action. Such actions include the method disclosed in U.S. Pat. No. 4,980,671, issued to McCurdy, which teaches connecting the remote monitoring unit to a telephone network for placing a telephone call to monitoring personnel whenever an alarm condition is detected. Another method for relaying an alarm condition, disclosed in U.S. Pat. No. 5,255,306, issued to Melton et al., makes use of a cellular telephone technology to contact the monitoring personnel.

### SUMMARY OF THE INVENTION

Existing monitoring systems, as illustrated in Figure 1, share common architectural features: they are closed systems employing fixed hardware such as specific IMUs and FMUs, and fixed software; they have a set scope limiting scalability to a set portion of the range of small single user systems to large enterprise systems; and, they have tightly coupled components with both business logic and the user interface mixed-in with equipment and communications - an implementation strategy that makes maintenance, customization, and enhancement difficult, costly, and error prone.

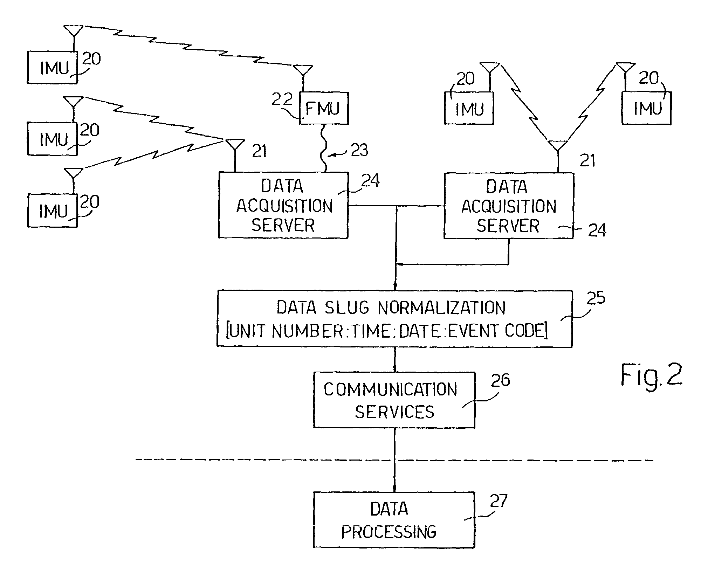

There is, thus, a need for the present invention, illustrated in Figure 2, which provides an event data capture system that can be loosely coupled with data processing and operator interface systems to achieve a total event monitoring system.

The data capture system of the current invention comprises acquisition, normalization, and communications subsystems. The data acquisition subsystem comprises a variable number of distributed data sources and data collection ports. The data normalization subsystem processes data acquired by the data acquisition subsystem and normalizes the data into a common format. The data communication subsystem interacts with an external data consumer system of this normalized data, for example, to accept requests for data collection actions by the data acquisition subsystem.

As illustrated in Figure 2, the distributed data source or gathering units can include remote units or tags 20, indirectly or intermittently connected to the data collection ports of the system 21, networked units, local units connected directly to the data collection ports of the system 22, and other data gathering units. The data collection ports 21 23 can communicate with these data sources over wireless 21 or land line communication channels 22. Source data input to data collectors can be accomplished by dial-up using POTS lines with transmission as packetized data, VOA, audio, DTMF tones or other viable data transmission means.

Each type of data acquisition equipment provides a standard data format for its type but not necessarily in a standard format overall. That is, source data is acquired in its raw form, a form specific to the device being employed. For each different type of equipment used to provide source data, a mapping must be defined for transforming the device-specific format into a standard format usually specified by the consumer of this data, i.e., an independent data processing system in the present invention. The transformation is accomplished by the data normalizing subsystem.

One embodiment of the current invention accomplishes this transformation by implementing the system using object oriented technology. A base class is defined for the generic class of "data gathering/source device". Then, for each different type of equipment monitored, a subclass of this base class is created with properties set to describe the current equipment. Custom methods are created or base methods are amended to accommodate the features of the current equipment.

As one skilled in the art will appreciate, this object-oriented design not only permits easy adoption of the features of different equipment types into the system, but also makes maintenance and upgrades less complicated since adjustments to base classes are automatically inherited by child classes. With careful design of the methods and properties for each class, developers can make changes at only one level of the object hierarchy and these changes will be inherited, i.e., will automatically apply to every dependent class.

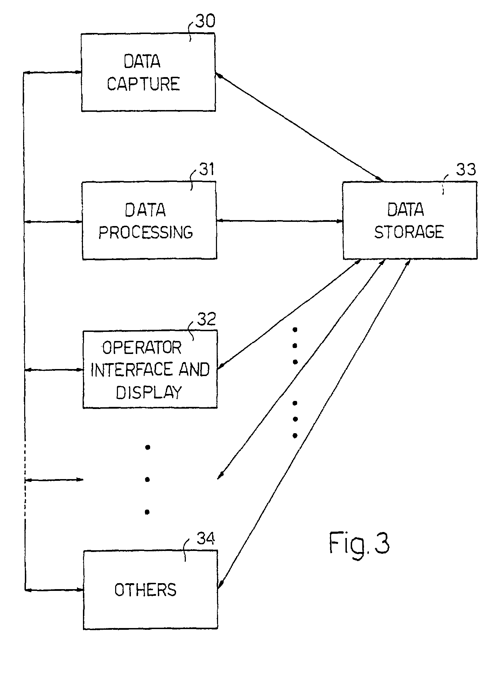

There is, thus, a need for the present invention, illustrated in Figure 3, which provides an independent, rules-based system for event data processing system 31 that can be loosely coupled with data capture 30 and operator interface systems 32 to achieve a total event monitoring system. The data processing system of the current invention comprises processing rules which are applied to the normalized data stream received from a data capture system. The data processing system of the current invention can be resident on one or more data processing servers distributed throughout the data processing system. In the present invention these servers are linked to share data from a common database and to execute rules processing according to a common rule set. Further, in the present invention processed data is distributed throughout the data processing system according to specified distribution rules for effective processing and response. In the exemplary embodiment of the present invention data is centrally stored in a data storage system 33, which, as illustrated in Figure 3, is accessible to all component systems, i.e, data storage is shared.

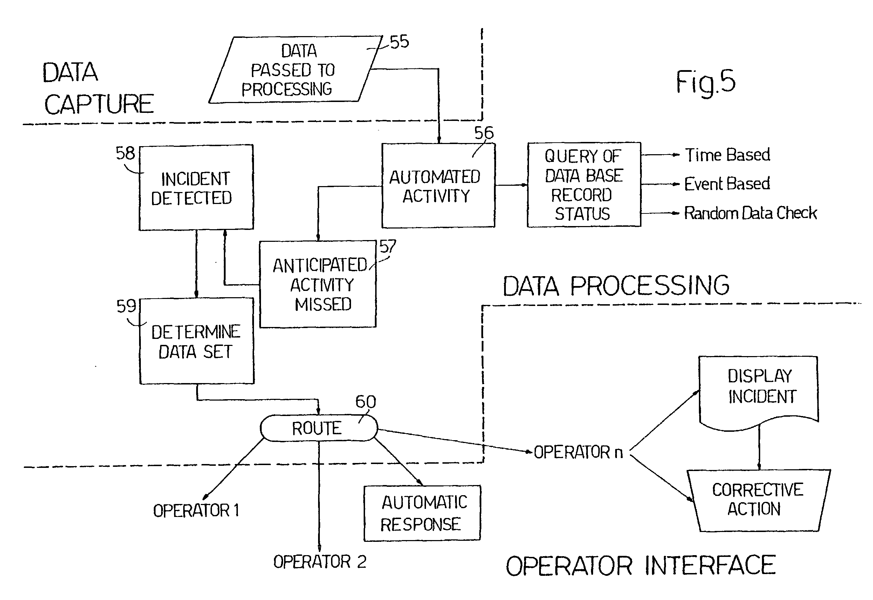

As illustrated in Figure 5, an independent data capture system provides data to the data processing system 55 of the current invention in a common or normalized data format defined by the data processing system. This normalized data represents a stream of monitoring events which is then processed by the data processing system according to preset of rules. The normalized data is first processed on an automatic level 56, recognizing and responding to anticipated events 57. If an event needs specific operator intervention 58, the data processing system provides information concerning that event 59 to an independent operator interface system 60 for appropriate direction and response.

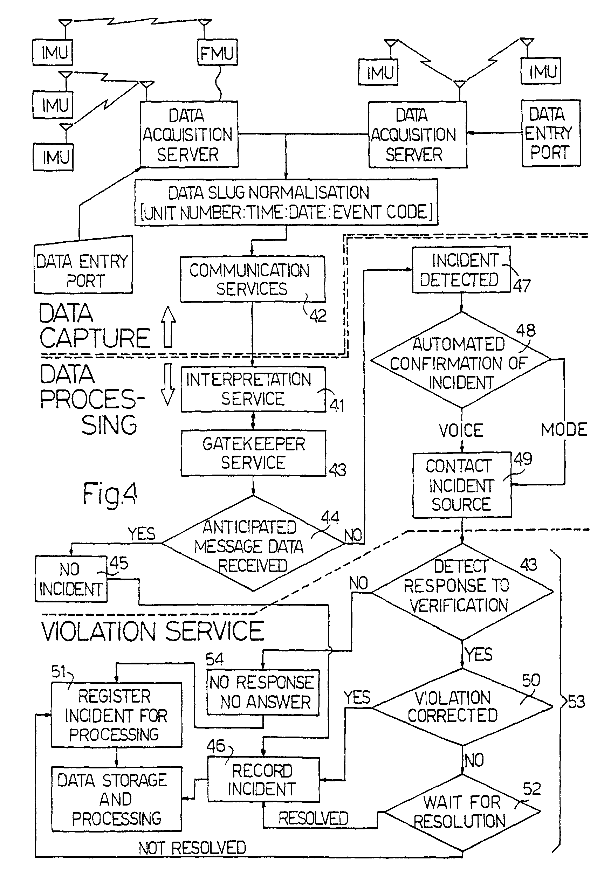

As illustrated in Figure 4, the data processing system also monitors the normalized data stream for specific events which are anticipated to occur at specified times 44. Failure to detect such an anticipated event can result in an automated active polling request 48 to the originating data capture system to determine the nature of the failure. Continued failure to detect can result in an alert to an independent operator interface system to initiate operator intervention 51.

The exemplary embodiment of the present invention uses a scalable component object model implementation approach. This embodiment can be deployed in any operating environment which supports the object model. This implementation approach permits scalability simply by changing deployment strategies.

The overall architecture strategy of the current invention divides functionality into three categories with components associated into data capture, data processing, and operator interface categories such that separate logical components can potentially be implemented with different applications. One embodiment of this implementation approach employs the object model and Microsoft Visual Studio and ActiveX, and any Open Data Base Connectivity ODBC compliant database, e.g., MS FoxPro, MS Visual FoxPro, MS Access, SQL Server, Oracle, dBase and others. The present invention is designed in such a way as to permit interchangeability of the various components chosen to implement each category of functions. The present invention, therefore, is inherently modifiable, robust, scalable, and loosely coupled by design.

It is the data processing system of the current invention that determines how the overall monitoring system operates. As illustrated in Figure 4, the data processing system interfaces with communications services 42 of a data capture system, with an independent Database server 41 46 51, and with an operator interface system 51.

### Communications Services

The data processing system acts as a consumer of normalized data produced by a data capture system and sent by the communications services (data communication subsystem) of the data capture system. A typical data capture system is described in U.S. Patent Application entitled "System for Data Capture, Normalization, and Communication" which is fully owned by applicants and is hereby fully included herein as if fully set forth herein. The data processing system of the current invention interprets data received from a data capture system correcting for time zone and clock drift, standardizing event codes, and places it in the database 41.

The communications services of a data capture system provide a level of hardware abstraction for the data processing system. Typically, a data acquisition unit (IMU or tag) calling in to a data capture system first identifies itself by unit number. As soon as communications services receives this information (in an identity block) it sends a message to the data processing system indicating "Early Warning" of event data to come and passes the corresponding communications port identification and unit identification in this message. Communications services continues to receive event information from the data acquisition unit (IMU or tag) until it has received all events, at which time it sends a message to the data processing system indicating "Event: Received" and passes a normalized slug of event data in this message. After the data processing system processes and stores all the slug data in the database, a "kiss-off" instruction is sent to the data capture system which then dismisses the corresponding data acquisition unit (IMU or tag).

This process of two-way communication between the communications services of a data capture system and the data processing system serves several functions. First, because the data processing system receives an "Early Warning" that the data acquisition subsystem of the data capture system has a specific unit on the line, data processing can begin to query the database and construct objects relevant to the owner of this particular unit. Second, the data acquisition unit is not "kissed off" by the data capture system until such time as it receives notification from the data processing system that the events have been received, processed, and stored in a database. Failure to get a "kiss-off" will cause the data acquisition unit (IMU or tag) to call back and resend the event data. Finally, by decoupling the data acquisition unit from the data processing function, only the data capture system has to be specificized to handle particular data acquisition units (IMUs or tags). Additionally, the data processing system remains unchanged regardless of the communication methods employed by the data acquisition units (modem, DTMF, flat file transfer, etc.).

### DATABASE SERVER

A database is a primary shared component among the data capture, data processing, and operator interface systems. It contains, among others, the rules for interpreting messages received from different data capture systems, for processing timed-out events, and for managing activation and clearing of violations. In the current invention, database access is accomplished by an instance of a Database server. Instances of the Database server can be initiated by any component or service of the data capture, data processing, and operator interface systems.

One embodiment of the current invention accomplishes this rules-based data processing by implementing the system using object oriented and relational database technologies. The relational database contains several class libraries that define objects common throughout the monitoring system. While some of these objects, e.g., monitored individual, curfew, and the like, will remain fairly constant in different implementations, other objects such as SLUG, Last Message, and Event, may change based on characteristics of the equipment being monitored by the data capture system. In the exemplary embodiment of the present invention, a base class for monitored equipment is defined and for each different type of equipment monitored, a subclass of this base class is created with properties set to describe that equipment. Custom methods are created or base methods are amended to accommodate the features of that equipment.

As one skilled in the art will appreciate, this object-oriented design not only permits easy adoption of the features of different equipment types into the system, but also makes maintenance and upgrades less complicated since adjustments to base classes are automatically inherited by child classes. With careful design of the methods and properties for each class, developers can make changes at only one level of the object hierarchy and these changes will be inherited, i.e., will automatically apply to every dependent class.

The data processing system components and services all access the shared database to accomplish their functions and to share data with each other and with the independent data capture and operator interface systems. In order to do this, in one embodiment each initiates an instance of a Database server which provides database access capabilities.

### Violation Service

Violation service 53, as illustrated in Figure 4, is one of several services that access the shared database of the present invention. Violation service determines when an incident should be presented as an alarm for follow-up. All events captured by a data capture system that may be considered for processing as an alarm are placed into a violation service table in the database. Violation service then checks each potential alarm against a database rules table to determine how that incident is to be treated.

There is an instance of the violation rules table which is private to each data processing system allowing local administration of violation rules based on five hierarchical levels from default handling to the specific monitored individual or item. Using these rules, as illustrated in Figure 4, violation service determines when an incident should be "activated", i.e., registered, for processing by the operator interface system 51. If a "clearing event" is defined in the database table and such an event occurs within a specified time period, the violation service will clear both the original incident and the clearing event 46. Rules can be encoded in the database which direct the violation service to prepare incidents for follow-up by printing, faxing, or paging.

### Gatekeeper Service

As illustrated in Figure 4, a data processing system according to the present invention also incorporates a Gatekeeper service 43 that provides alarm generation for NOT receiving an event from specific data acquisition units. Rules regarding such generated events are stored in a database table and generated events may include OUT PAST A SET TIME, MISSING SANITY CHECKS, and FAILURE TO LEAVE AT A SET TIME, and others. Each Gatekeeper initiates an instance of the Database server in order to access these rules and process other Gatekeeper events.

The Gatekeeper service utilizes the services of a Watchdog timer service, described below. When the Watchdog times out a Gatekeeper event, the Watchdog service notifies the Gatekeeper service. Then the Gatekeeper service employs its instance of the Database server to access and execute methods to process these timed-out events.

Since the Gatekeeper service is associated with the shared database it is a shared service and may be referenced by instances of the Database server initiated by any subsystem of a data capture, data processing, or operator interface system. A Database server instance may execute an exposed method associated with the Gatekeeper service. For example, for a particular data acquisition unit subsequent to its being serviced, an update may be made to the delta minutes until next status event (curfew, sanity, etc.). If this adjusted status event time is earlier than the one stored in the Gatekeeper rules table, the Gatekeeper will update the Watchdog timer service tables in the shared database. If the adjusted time is earlier, the Gatekeeper will not update the Watchdog timer service tables in the shared database.

In a first exemplary embodiment, the Gatekeeper service checks for these events by periodically polling the 'last message table' for each type of data acquisition unit. Each 'last message table' is polled separately for each type of event. If there are multiple "NOT received" events for a type of unit, this results in multiple polling of the corresponding 'last message table'. This strategy has the disadvantage of potentially requiring significant processor overhead, especially for installations with very large caseloads of monitored individual.

The Gatekeeper of a second exemplary embodiment of the present invention avoids periodic polling thereby increasing scalability by not increasing processor overhead as the capacity of the system is increased.

### Watchdog Service

Watchdog service, illustrated in part in Figure 2, is another service associated with the shared database. The sole function of the Watchdog service is to keep an ordered list of registered processes by the time each is supposed to be executed. Only one timer need be set for the process at the top of the list. If this timer expires the appropriate process is notified. The Watchdog timer service does not execute any methods in any system but only notifies that a process has timed out. Utilizing this approach, a shared Watchdog timer service can service numerous components without undue processor overhead and without getting bogged down with any one component.

There are two types of Watchdog events: a Watchdog monitor and a Watchdog timer. They differ only in the component to be notified when the event times out. A Watchdog monitor notifies any and all components registered with the Watchdog as a monitor, while a Watchdog timer notifies only the component object that set the timer.

The Watchdog monitor is used to keep track of the proper operation of any unattended service. For example, suppose that each communication subsystem of a data capture system is implemented by one or more communication server. Such a communication server will register with the Watchdog timer service of the database providing both a Ping Interval and a Line Interval (values for each are maintained in the system registry).

The ping interval describes the number of minutes between successive "pings" for the Watchdog to verify that the communication server is alive. This is often referred to as a "heartbeat". If the communication server fails to respond with a "heartbeat" within the prescribed interval, all registered Watchdog monitors (e.g., a supervisor's workstation) will be notified and corrective action, such as checking the communication server computer, is suggested.

The line interval prescribes the number of minutes within which a call is anticipated from the monitoring unit. This number varies with the caseload of monitored units and is recalculated by the Database server as each call is received. Every time a communication server receives an event from a data acquisition unit the Watchdog is fed an updated line interval. If the line timer is triggered, all registered Watchdog monitors are notified and corrective action, such as checking the phone lines, is suggested.

The Watchdog service is used to notify other components that certain processes are to be initiated. Components, requiring the use of the Watchdog, register with the Watchdog and pass it a process ID and number of delta minutes. When this delta time elapses the Watchdog executes the notify method in the registered component. The Gatekeeper service makes extensive use of this Watchdog service.

### Incident Service

Incidents are any violation of a rule detected by the data processing system and which remain uncorrected. The incident service detection 44 and confirmation facilities 47 48 are illustrated in Figure 4. The incident service routes uncorrected incidents to an independent operator interface system with an indication of which operator is to handle the incident. Skills based routing, least activity routing, and same operator routing are incident routing rules which can be specified and stored in the database and which help determine which operator is to respond to the incident.

The type of action taken, either by a system or an operator or both, with respect to an uncorrected incident and its result is also stored in the database. A typical action might be "Call to monitored individual" and result. Incident follow-up and notification rules can be included in the rules base and include notification method and notification days and times. Incident services extend to rules that can be included in the database which direct either or both random operator contacts with monitored individuals or regularly scheduled contacts. When a contact is to be made randomly the time to the contact is randomly generated and stored in a database table as an action to be taken at a specified time. Then, both random and regularly scheduled contacts both appear as actions to be taken at some future time.

### Voice Service

As illustrated in Figure 4, a data processing system according to the current invention includes voice service 48 to send program calls to data capture systems for accomplishing automated confirmation of incidents. After a predetermined time has elapsed since the incident occurred, a call is placed by voice or modem to the data acquisition location, i.e., the source of the incident 49. Either an audible message is played or a data packet is sent and a response is awaited. The data processing system will receive a response which corrects or confirms the incident or no response, which also confirms the incident 43. The database is updated accordingly 46.

### Backup and off-site Monitoring Service

Regularly schedule backup of the database occurs to specified locations either on or off the site of the database.

### Security and Audit Trail Service

The security and audit trail service is a database service initiated by the operator interface subsystem when a user logs on. In the object-oriented implementation of the preferred embodiment, the base security object contains default permissions available to any user and can be queried whenever a user attempts to perform a restricted operation. Maintaining separate security objects allows system security to be defined and modified without altering any other components. Individual users or groups of users can be given specific permissions beyond the default.

The auditing service keeps track of changes made to the database by users. It is contained in the security object since each query to the security object which results in granting a user specific permissions will also result in an entry in the audit table in the database.

There is, thus, a need for the present invention, illustrated in Figure 3, which provides an operator interface and display system 32 for incident follow-up that is loosely coupled with data capture 30, data processing 31, and other 34 systems to achieve a total monitoring system.

The operator interface and display system of the current invention provides an independent system for presentation of incident data, defined by parameters specified in rules stored in a shared database, to one or more operators for either or both further processing or response. Communication of information between independent systems and the shared data storage system can include dial-up on POTS lines with transmission of information in packet, VOA, audio, DTMF tones or other viable data transmission means. The independent systems illustrated in Figure 1 can be networked by any means feasible, including direct connection. The overarching architectural paradigm that governs the design of each independent system is that the independent systems share data via a common database and process data according to a common rule set stored in this shared database.

The information gathered by the data capture system, processed by the data processing system, and responded to by the operator interface system must also adhere to a common data format. The data captured represents events which are then processing by the independent components according to a set of rules which are stored in the shared database and administered by the independent data storage system.

As illustrated in Figure 5, the captured data 55 is first processed by data processing on an automatic level 56, which recognizes and responds to anticipated events. If a captured event needs specific operator intervention 58, the data processing system stores information of that event 59 in a data storage system data set (database incident table data set). This data set is then processed by the operator interface system for appropriate direction and response 60.

As illustrated in Figure 4, the data processing system also monitors for specific events which are anticipated to occur at specified times 44. Continued failure to detect such an anticipated event can cause an incident data set to be entered in the shared database 46. This incident data set is then processed by the independent operator interface system for appropriate direction and response.

### BRIEF DESCRIPTION OF THE DRAWINGS

For a better understanding of the nature of the present invention, reference is had to the following figures and detailed description, wherein like elements are accorded like reference numerals, and wherein:
**Figure 1** is a functional block diagram of a typical monitoring system according to the prior art;
**Figure 2** is a block functional diagram illustrating the subsystems of the current invention, i.e., data acquisition, normalization, and communication; and
**Figure 3** is a functional block diagram generally illustrating the relationship of the current invention, i.e., data capture functionality, to an independent data processing system which processes the data captured and an independent operator interface system which displays the data and processes operator input, e.g., as described in the pending patent application 09/316220 which is fully owned by the patentees and which is hereby fully incorporated by reference as if fully set forth herein.
**Figure 4** is an exemplary block diagram of data capture system interface with the data processing system of the current invention which illustrates the rules-based processing for anticipated events in blocks 44 through 49, which rules include the possibility of an incident being routed for follow-up to an independent operator interface system according to the present invention.
**Figure 5** is an exemplary block diagram of data routing from the data processing subsystem to the operator interface of the current invention; and
**Figure 6** is an exemplary system functional block diagram generally illustrating the relationship of the current invention, i.e., operator interface functionality, to independent data capture and data processing systems, e.g., as described in the pending patent application 09/316220 which is fully owned by the patentees and which is hereby fully incorporated by reference as if fully set forth herein.

### DETAILED DESCRIPTION OF PREFERRED EXEMPLARY EMBODIMENTS

The present invention performs data capture functions for a population of distributed data sources. In one exemplary embodiment, illustrated in Figure 2, the present invention captures data for a system which monitors the location, movement and related activities of a population of individuals who are each associated with an individual monitoring unit (IMU) 20. This embodiment is fully described in pending patent 09/316220 which is fully owned by the patentees and is herein fully incorporated by reference as if fully set forth herein.

The distributed data gathering units or IMUs 20 of the exemplary embodiment each interface with a Data Acquisition Server 24 for sending collected data to and receiving requests for data collection from other independent systems, as illustrated in Figure 3. Each IMU 20 can have non-common interface protocols for acquiring their data. However, specific indicia of the source and time of data acquisition are required by the preferred embodiment to be a part of the data stream sent by the data capture system to other independent systems. To accommodate this disparity in data format, the preferred embodiment defines an object class for these data gathering units with a base class incorporating generic features of such units and a specific child class for each particular instance of such units.

In the exemplary embodiment of the current invention, a database is used to store event data. This shared database is illustrated in Figure 3 as data storage 33 and is accessible to all the independent systems which make up a monitoring system.

In the exemplary embodiment, illustrated in Figure 2, Data Acquisition Servers 24 are instances of the Data Acquisition subsystem. Data Acquisition Servers 24 receive data from multiple types of IMUs 20, sends data to Data Slug Normalization subsystem 25 (an instance of the Data Normalization Subsystem) which normalizes data and forwards the normalized slug to the Data Communication Services 26 (an instance of the Data Communications Subsystem) which, in turn, forwards the slug to an external, independent Data Processing system 27 as well as other independent 34 systems illustrated in Figure 3. In the exemplary embodiment a copy of the event data is stored in a shared database at each stage of its processing, from receipt to normalization.

As illustrated in Figure 2, in Data Slug Normalization 25, particularized methods are associated with each child IMU class such that non-common data formats are transformed to a common data format. This instance of the Data Normalization Subsystem 25 then packages these common data formats into a data "slug", stores it in the shared database, and it then is forwarded by the Communication Services 26 to a Data Consumer System 27 or other independent systems 34 illustrated in Figure 3.

In an alternative embodiment, a single type of IMU 20 can send collected data directly 21 to a Data Acquisition Server 24 and the receiving Data Acquisition Server 24 can forward this data stream to the Data Normalization Subsystem 25 which is then sent on as a "slug" of normalized data to a data consumer 27 by the Data Communication Subsystem 26 or to other independent systems 34 illustrated in Figure 3.

In the exemplary embodiment, the pre-normalized data string may look like this:
nnnnnn hhmm yyyymmdd hhmm yyyymmdd xx hhmm yyyy mmdd xx ...
where
- nnnnnn =: data source unit number
- hhmm =: time
- yyyymmdd =: date
- xx =: event code
In the exemplary embodiment, the first twenty bytes containing (nnnnnn hhmm yyyymmdd)include the time and date that the message was received by the data acquisition subsystem. All subsequent date-time stamps represent when the corresponding event occurred.

This standard can be sub-classed, as described above, to account for larger unit numbers, secondary event codes, possible inclusion of a transmitter ID, etc.

In the exemplary embodiment the physical acquisition of a data stream is handled by a communication server client which is illustrated in Figure 2 by Data Acquisition Servers 24. In the exemplary embodiment specific communication ports are assigned to particular brands of equipment. Each communication port is "watched" for events, events are normalized and packaged in a "slug" and when all events for a given device are received, the "slug" is communicated, i.e., passed on. In the preferred embodiment the "slug" is passed on to an independent data processing system. But, as illustrated in Figure 3, any other type of data consumer system 34 can be sent the normalized "slug" of data. In the exemplary embodiment the normalized "slug" is stored in a shared database 33 and the data consumer system is notified of its availability in the database.

In the exemplary embodiment, two-way communication between the data communication subsystem (Data Acquisition Server 24 in Figure 2) and the consumer of the "slug" (data consumer system) is maintained until the recipient releases it. This is done so that the data source, i.e., the IMU 20, is not released by the communication server client until the data recipient (Data Processing 27 in Figure 2) has received and stored all the data sent to it in the "slug". The data capture protocol utilized in the exemplary embodiment is so structured that the data source will retransmit its event messages if a release or "kiss-off" is not received in a timely manner from the communication server client.

Thus, data capture systems provide a level of hardware abstraction for their consumers, by preprocessing captured data and communicating it to the consumer. In the exemplary embodiment illustrated in Figure 2, the data source unit or IMU 20 first identifies itself by unit number. As soon as the communication server client receives the identity block, it sends this information on to the consumer system 27 as an early warning so that the consumer 27 can perform preparatory steps in anticipation of the "slug" of event data.

The system of the exemplary embodiment monitors movements of individuals. Anyone skilled in the art will realize that the inventive concept taught herein applies equally well to locating a population of individuals or objects (such as cars or boats). Because many varying and different embodiments may be made within the scope of the inventive concept herein taught, and because many modifications may be made in the embodiments herein detailed in accordance with the descriptive requirements of the law, it is to be understood that the details herein are to be interpreted as illustrative and not in a limiting sense.

The exemplary embodiment of the present invention performs data processing functions, acting as a data consumer system for data produced by an independent data producer system that is monitoring a population of distributed data sources. The present invention provides database services: data is stored in database tables and accessed by database functions. Additional services are also provided which are built on these database services. The exemplary embodiment of the present invention also interfaces with an independent operator interface system for output display and input of operator response to the data displayed. The independent data capture and operator interface systems also have access to the database services.

Other features provided by the present invention include:
- Low level supervision
- Fee collection
- Drug/alcohol monitoring

### DATABASE SERVICES

The database of the exemplary embodiment of the present invention tracks information relating to each of the individuals monitored by the system. The database contains the rules which form a knowledge base for directing the operation of the monitoring system of which the present invention is the data processing part. Operational knowledge is accumulated in database tables as a data capture system sends data to be processed by the current invention and as an operator interface system responds to uncorrected incidents result from data processed by the current invention.

The integrity and accuracy of the database contents are vital to the effectiveness of the monitoring system because the rule-based processing depends upon the accuracy of the stored data. This is true not only for specific actions but for adjustments made to the rules themselves which are based upon the composition of the database. In the exemplary embodiment the database is a relational database maintained with internal consistency checks implemented by update and deletion triggers to achieve referential integrity.

The monitoring system of the exemplary embodiment is adapted for relatively easy addition of new technologies. Common business rules must, therefore, be independent of equipment. In the exemplary embodiment this is achieved by defining base classes for generic equipment types Objects that deal with specific equipment or technologies are then sub-classed to deal with equipment specific features.

### Database Objects

Several types of data tables are maintained in the database. Among these types are rules, common objects, and service specific objects.

### Rules Database Tables

In the exemplary embodiment of the current invention, the rules determine what processing is applied to the data collected by an independent data capture system. The data processing system database includes rules for processing this data based on standard responses to anticipated data and flexible responses derived from any combination of expert/knowledge-based programming, operator intervention, or operator direction. Responses can include further data queries, action taken to assess the status of monitored individuals, or other appropriate actions.

In the exemplary embodiment of the current invention, some of the following incident handling rules which can be included are:
- Skills-based routing - to the operator with the highest skills level for this type of incident
- least activity routing - to the operator with the least activity during this shift
- prioritization of incidents - an order in which incidents are to be handled by operators
- follow up to same operator - if the operator who handled the original incident is available the follow-up is routed to that operator
- specialized subpopulations - certain types of incidents are routed to a subset of all operators

In the exemplary embodiment, rules can be included for managing notification handling, i.e., notification times and days can be specified by individual being monitored and by type of incident and its severity.

In the exemplary embodiment, rules can be included which direct how telephone calls are to be made by operators: either random or scheduled times may be specified.

### Common Object Data Tables

In the exemplary embodiment all the systems of a monitoring system share certain common objects. The data for some of these objects is stored in the following tables:
Level 1 authority - Agency
   - Properties -: Primary key
   Name
   Address
   City
   State/province
   Postal code
   Telephone number(s)
   Office
   Cellular
   Home
   Pager
   Contact
   Special instructions
   Force linkage betw levels 2 and 3
   authorities?
Level 2 authority - District
   - Properties -: Primary key
   Level 1 authority key
   Name
   Address
   City
   State/province
   Postal code
   Telephone number(s)
   Office
   Cellular
   Home
   Pager
   Contact
   Time zone relative to host
Level 3 authority - District
   - Properties -: Primary key
   Level 1 authority key
   Level 2 authority key (if forced)
   Name
   Address
   City
   State/province
   Postal code
   Telephone number(s)
   Office
   Cellular
   Home
   Pager
   Contact

### Monitored Individual

- Properties -: Primary key
Level 3 authority key
Level 2 authority key
Level 1 authority key
System type
# of data acquisition units assigned
Unit number
Transmitter ID
Transmitter timeout
Sanity call interval
Name
Address
City/town
County
State/province
Phone number(s)
Office
Cellular
Home
Pager
Agency assigned to case number/DOCnumber
Government ID/Social Security Number
Time zone relative to host
Alternate locations
Race
Sex
Marital Status
Height and weight
Date of birth
Eye and hair color
Picture
Notification priority
Current status
Term on ED
Start date
Termination date
Reason for termination
Offense
Specialized caseload/program
Special instructions

### Curfews

- Properties -: Day of week
Number in the day
Date range curfew is active
Leave time
Enter time
Offender
Date/time of last change

### Equipment

- Properties -: Unit number
System type
Serial number
Transmitter ID
Sanity call interval
Assigned to client?
Tamper Receiver and Transmitter
TX in range
AC present
Time zone relative to host
Battery condition Receiver and

### Transmitter

Transmitter timeout - Slug raw data communicated by the unit. May be preprocessed (normalized by the communication services of the data capture system).
- Properties -: Unit number
Unit assigned
Time received
Date received
System type
Transmitter ID
Number of events contained in slug

### Event Information - one reportable event associate with Slug

- Properties -: Time of event
Date of event
Type of event

### Incident - event or event(s) defined by rules as and incident

- Properties -: Time of event
Date of event
Type of event
Type of incident
Controlling authority Level 1 to 3,
offender,
caseload, etc.
Activation time and date
Follow up method
Method(s) of reporting and time to report
Print
Facsimile
Page
Telephone call
E-mail
Staff handling incident
Was incident handled? When?

### Transaction - any event, incident, change, etc. completed in the system

- Properties -: Transaction type
Staff ID
Offender ID
Time of transaction
Date of transaction
Unit number, if applicable
Transmitter ID, if applicable

### Security - allows unique definition of permissions

- Properties -: Operator ID
Incident handling preference
Array of permissions

### Last Message - status of equipment/offender as of last contact

- Properties -: Unit number
Offender key
Time and date of last report
Time and date of next sanity call
Time and ate of next curfew
Time and date of last movement
Unit assigned
Transmitter tamper status
A/C power
Receiver battery status
Transmitter battery status
Transmitter timeout
Offender out past curfew
Time and date offender became out past curfew

### SERVICE SPECIFIC OBJECTS

In the exemplary embodiment several services are associated with the shared database. These services initialize an instance of a Database server.

### Watchdog

- Properties -: Default sanity call interval
Debug level
Number of channels available
Number of registered systems
Array of registered systems

### Gatekeeper - monitors non-communication events

- Properties -: Number of registered systems
Array of registered systems
Callback grace time
Missed sanity call reminder
Unit assigned

### DATA PROCESSING SYSTEM SERVICES

In the exemplary embodiment of the data processing system of the current invention several services are included. These services are available to other data processing system components as well as to either or both the independent data capture and operator interface systems. These services include the following:

### Gatekeeper Service

As illustrated in Figure 4, in the exemplary embodiment of the current invention the Gatekeeper service monitors "events" that are the result of not receiving a message that was expected 44. Examples include failure to return to a designated location within a specified time period, failure to leave on time, failure to receive an expected status check within a specified time period, and the like. In the exemplary embodiment, the Gatekeeper 43 polls the appropriate table in the database to determine the status of anticipated events 44. If the polled table indicates that the anticipated event has occurred, "no incident" is recorded 45 46. In the event that the polled data indicates that an anticipated event has not occurred 47, confirmation of the incident is sought 48, as described in voice services below.

In an alternative exemplary embodiment, polling is avoided. This increases the scalability of an implementation by not burdening a processor with this periodic polling.

The Gatekeeper is a communication server that monitors timer events rather than communication ports. On startup of a data processing system, it will invoke an instance of the Database server and register with it. The Database server then checks all registered last message tables and determines the next time for a Gatekeeper event. It will register each time with the Gatekeeper as a Process ID (representing system type and event type), the number of minutes before timing out, and the Unit number associated with this event.

Each Database server will call a method in the Gatekeeper every time it processes a message. The Database server will pass the appropriate Process ID, Unit Number, and the delta minutes it has stored in the last message table for this unit. If this time is earlier than the one that the Gatekeeper has stored for this Process ID, the Gatekeeper will call the Watchdog service and update it. The Gatekeeper of the present invention utilizes the services of the Watchdog, described below, to alert it when an out of time or missed status event occurs. If the unit number and Process ID match and the delta minutes is greater than that being stored, the timer will be stopped and the Database server will be consulted to find a new next event and the Watchdog will be fed. Otherwise, the Gatekeeper will simply ignore the report.
When the Watchdog times out a Gatekeeper event, it calls a process method in the Gatekeeper. The Gatekeeper than executes the appropriate method in the Database server to process this and other events that may be queued up for the same time.
In the exemplary embodiment the Gatekeeper API will have the following method exposed to the Database server:
RegisterEvent(nProcessID, nDeltaMinutes, nUnitNumber)
In the exemplary embodiment the Database server will support the following exposed methods for the Gatekeeper:
Register(cProcessName, nServerType, nChannels)
Unregister(cProcessName, nServerType)
GatekeeperEvent(nProcessID)
In the exemplary embodiment the Gatekeeper will only need to pass the cProcessName parameter.

### Voice Service

Voice services are used primarily for sending program calls to remote units of independent data capture systems. These services can be used to intercept operator involvement in the early verification phases of events that can be resolved by the individual or other personnel at the data acquisition location. Such events may include loss of power, missing status calls, short duration leaves, etc.

When an "incident" is generated, in Figure 4 for example, by the Gatekeeper 43 (as described above) if the incident is of a predetermined class the automated voice confirmation service 48 is accessed. A call is placed, by voice or modem (as appropriate to the data acquisition location) following a predefined time delay after the incident is reported, and the incident source is contacted 49. If the call is answered, an audible message may be played or a data packet sent by modem to determine the situation status and potentially seeking correction. The data processing system then waits for a response to the inquiry 43. If the system receives a response that the incident is corrected 50, the incident status is revised and recorded 46 in the database. If the call is not answered, the incident status is updated to record the attempted resolution and failure and this status is recorded 51 in the database. If the call is answered and the incident remains uncorrected, another delay is started 52 to determine if the situation gets resolved within a specified time interval. Resolution or failure is then recorded in the database 46.

A database rule can be stored so that voice services are activated and deactivated on a caseload basis to assist an operator interface system in managing its workload. Such a rule would result in the operator interface system decreasing operator load when desirable and increasing operator direct involvement when operators are less busy.

### Backup and off-site Monitoring Service

The data processing system of the preferred embodiment include provision for either on or off site backup of the database. Backup must not interfere with database availability since monitoring services must be ultra-reliable and available 24 hours a day, 7 days a week without interruption.

### Security and Audit Trail Service

In the exemplary embodiment an abstract security object can be created whenever a user logs into any of the three systems: data capture, data processing, or operator interface. This service allows a suitably authorized user to increase database table and field level security as the need develops. A method of this security object returns permissions when accessed and if none are defined then a default response is returned.

The database system of the preferred embodiment is set up to keep a transaction log of all changes both at the table and field level. Typically, this log includes time, date, and the last change made. The granularity of this audit trail depends on the capabilities of the database in a particular implementation of a monitoring system.

### Watchdog Service

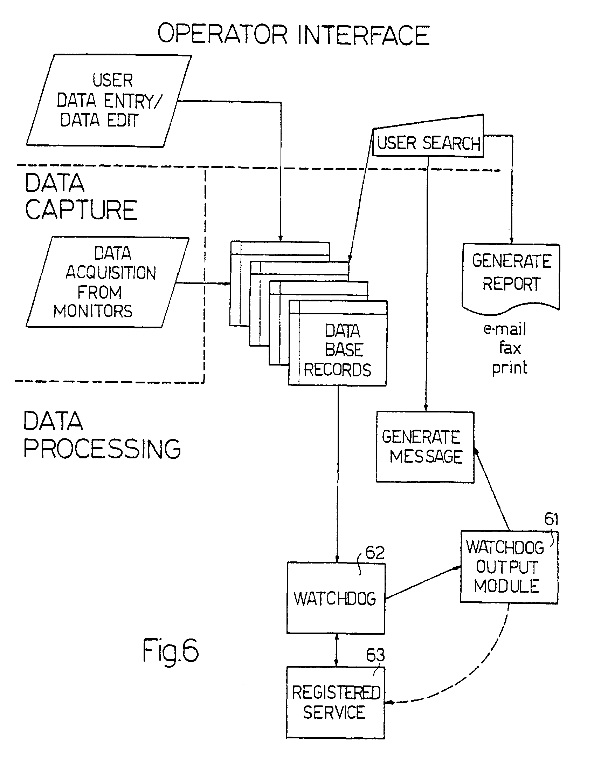

Watchdog services are partially illustrated in Figure6. Watchdog services make sure that no failure of an unattended system components goes without notice. This service applies to all three systems: data capture, data processing, and operator interface. Watchdog services are coordinated through the use of database rules as applied to data stored in database tables. A communication server, implementing the communication services of the data capture system, can fail due to telephone service interruption or process termination without generating an incident. In the exemplary embodiment of the present invention, the Watchdog service checks the raw data file, xxx_DATA.DBF, created by the communication server to see if it has been updated within an interval specified in a database rule. The time interval is dynamically determined based on the number of active data acquisition units in the field that are associated with that communication server. The time interval is recalculated on a periodic basis. The Watchdog currently "barks" by sounding an audible alarm or by displaying a message.

Other unattended servers are checked by referring to the time and date stamp in a Watchdog table in the database. This table contains only one record which is updated on every cycle of the unattended server. In the exemplary embodiment an entry in an .INI file determines the maximum interval permitted between updates of this database table.

An alternative embodiment requires that each component to be watched must first register with the Watchdog. Registration includes and identification key, and time between table entries in delta minutes. If the component is currently registered the table entries are simply updated. When a service is terminated manually, it is unregistered with the Watchdog.

During normal operation the service to be watched will continuously "ping" the Watchdog with its identification key and delta minutes. The Watchdog considers a "ping" as a registration only if the service is not currently registered with the Watchdog.

The Watchdog also has a component that serves an output module to receive Watchdog alarms. Potentially any computer or operator workstation in any of the three component systems (data capture, data processing, operator interface) can register for watchdog output. The Watchdog output module 61 registers 63 with the Watchdog 62 to receive any Watchdog warnings.

In the exemplary embodiment the Watchdog service is an API that includes the following exposed methods:
FeedTheDog(nProcessID, nDeltaMinutes)
RegisterMonitor(cProgID)
UnRegisterMonitor(cProgID)
RegisterTimer(cProgID, nProcessID)
UnRegisterTimer(cProgID)

### Incident Service

The data processing system of an exemplary embodiment of the present invention includes an incident service which provides all of the following functions implemented as an incident server:
Watchdog
Timing out of possible violations
Activating violations for operator handling
Auto paging of selected violations
Processing results of voice calls
Printing of incidents either automatically or on demand
Queuing of voice calls for random contact
In alternative embodiments, the functions of the incident service are separated into separate independent components.

In the exemplary embodiment the incident server references a daily incident table, VIO_mmdd.DBF, where "mm" represents the month and "dd" represents the day. This table is periodically polled (e.g., every 15 seconds) to determine if there is any action to take. Actions performed by the Incident server during polling include:
Setting time for violations to become active
Clearing violations that are not to be acted upon
Activating violations at the assigned time
Producing follow-up events, such as printing, paging, or facsimile

These actions are all triggered by flags in the incident table that are set either by the Incident server or other components that handle one or another aspect of incident processing (e.g., an operator interface system). The Incident service of a second exemplary embodiment does away with the periodic polling by substituting the strategy employed by the Watchdog service, using the Watchdog timer control and the Gatekeeper to kick off the incident processing.

The Incident server of the exemplary embodiment is contained in the Gatekeeper component and the Database server. Incident and Gatekeeper modules can be run separately or as part of the same component, depending on caseload.

The Incident server utilizes the services of the Watchdog to alert it when an incident needs attention. On startup, the Incident server initializes the Database server and registers with it. The Database server will then check the appropriate incident table in the shared database and determine the next time for an incident event. It will register this time with the Incident server as a Process ID, the number of minutes before timing out, and the Unit Number associated with this event.

Every time an incident is placed into the incident: table, the Database server will feed the Gatekeeper a Process ID and a zero time. This will cause the Gatekeeper to immediately process a ServerEvent in its instance of the Database server.

Skills based and least busy routing of incidents are available in the exemplary embodiment. Skills-based routing involves presenting an incident to an operator that is best equipped to handle it. This could include facility with a foreign language, previous handling of similar incidents from a specific individual, previous handling of other incidents from a specific individual, or experience with a particular caseload. Operator profiles are stored in the shared database which indicate operator skills. Least busy routing involves presenting an incident to the operator who has the fewest incident in its queue or who has handled the fewest incidents to date.

Priority and time handling of incidents are available in the exemplary embodiment. Priority handling presents incidents to an independent operator interface system in an order determined by the seriousness of the incident matched with the experience and/or skills of the operator. This requires that rules be supplied in database tables which prioritize incidents and operators for such handling. Timed handling presents incidents in the order they were received or occurred. The exemplary embodiment routes incidents according to the rules stored in the shared database and incidents are stored in database tables with routing preferences noted. An independent operator interface may follow these preferences or not.

The present invention performs operator interface functions relating to the follow-up processing of alarm incidents for a system that monitors a population of distributed data sources for specific events. In an exemplary embodiment the operator interface includes a number of components for operator-directed display and manipulation of alarm incident information obtained from a shared database. The operator interface system also provides functionality for the inter-system implementation of desired responses to alarm incidents an by recording these responses in the shared database. Thus, the shared database is a major source of events driving the operator interface system.

In the exemplary embodiment, information is gathered by an independent data capture system, processed by an independent data processing system, and is responded to by the operator interface system. Therefore, it must adhere to a common data format and in the exemplary embodiment of the present invention a relational data model is employed. The data captured represents events which are then processing by the independent components according to a set of rules which are stored in the shared database and administered by the independent data storage system which in the exemplary embodiment is a relational database management system.

In the exemplary embodiment, the operator interface system is event driven. The operator interface system includes a number of components for display of desired information to the system operators and to allow access to the shared database. The basic format for any screen displayed to an operator consists of menus, windows, dialogs, buttons, and check boxes designed to make it easy for an operator to communicate with the system. The exemplary operator interface is designed to take full advantage of a mouse, but numerous keyboard shortcuts are provided to make the system easy for power keyboard users as well as those without a mouse. These components also provide a user-friendly interface for manipulation of the alarm incident data and for implementation of desired responses to this alarm incident data presented to an operator. It includes the following components:
Data Entry/Edit Forms

A variety of data entry/edit forms are presented to an operator by the operator interface system to capture and modify data. In the exemplary embodiment all of the forms adhere to a standard that includes, where appropriate:
Tabbed forms with a name on each page
Common navigation buttons with graphical labels
Search on multiple fields and/or grid-style incremental search
Simple presentation with logical groupings and a minimum of mandatory fields

### Incident Handling Screens

The operator interface system of the exemplary embodiment processes incidents routed to it by other independent systems, e.g., by a data processing system. Incidents to be processed are entered by these other systems in tables in a shared database and are accessed in this shared database for follow-up by the operator interface system. In the exemplary embodiment skills-based, least busy, and priority-based routing are accomplished when these other independent systems enter incidents into the database tables containing incidents to be processed. However, in the exemplary embodiment of this multi-system architecture the assignment and ordering of incidents for processing are database server functions, accomplished through relational database triggers employing rules stored in the shared database. When the operator interface system accesses incidents, it too is using a database server subject to these same rules because the rules are embedded in the data. Therefore, the time at which these rules are applied might vary, depending on the implementation approach. The rules governing ordering might apply when the incidents are retrieved for processing just as well as when the incidents are first entered into the database tables.

In an alternative embodiment an alternative approach is taken. Regardless of when routing rules are applied, the operator interface of the current invention allows the operator the final say in how incidents are processed. Generally, with any routing strategy the operator would be presented with only one incident on the screen at a time, the ordering of presentation having been predetermined. That is, the incident presented is determined by rules governing the routing and/or handling strategy. However, experience suggests that denying operators the ability to select from among all pending alarms can cause problems, as rules cannot be determined for all possible contingencies and codified in the shared database. Therefore, the present invention addresses the problem of how to present operators with enough information to make some intelligent decisions on processing incidents while at the same time highlighting incidents or individuals that rules have targeted for specialized handing.

To address this, an alternative exemplary embodiment of the current invention present presents all active incidents to all registered operators, but prioritizes them according to operator profiles stored in database tables. In addition, this alternative exemplary embodiment allows an operator to reorder the incidents grouped by, for example: offender, incident type, priority level, or caseload.

Operator profiles are needed to drive whatever approach is adopted for routing and handling incidents. Since these profiles must be shared, they are stored in the shared database in the exemplary embodiment of the present invention. Each authorized operator has an "operator profile" stored in tables in the shared database. In the exemplary embodiment of the present invention a default profile, of up to 32 fixed attributes, is built when the database is first installed and is automatically assigned to an operator at the time the operator is authorized as a user of the operator interface system. Thereafter, each operator's permanent profile can be tailored to that operator's specific attributes.

However, not all of the 32 attributes are possessed by every operator. And, for a particular mix of operators not every attribute will be represented. Therefore, the operator interface system of the exemplary embodiment of the present invention includes a profile administrator component which ensures that every attribute is represented by at least one logged-on operator. The profile administrator component accomplishes this by dynamically adjusting each operator's permanent profile to an active profile whenever an operator logs-on for incident processing. This active profile determines how incidents are ordered and colored on an operator's screen. Thus, the purpose of the profile administrator is simply to ensure that the operators currently logged-on to the operator interface system cover all attributes. For example, if only one operator is logged into the system, that operator inherits all operator attributes and incidents will be ordered by priority and/or time activated.

### Report Generation Screens

In the exemplary embodiment,data-driven report menus allow operators to specify the unique suite of reports that they will use in their operation and their distribution. In addition, the report engine permits development and inclusion of custom reports without necessitating access to the system source code. The operator can direct report output to printers or files. Files can also be viewed on screens or transmitted to others via facsimile or e-mail.

### Training and Testing Mode

Training mode permits new and experienced operators to hone their monitoring skills without affecting any real-time data. In the exemplary embodiment of the present invention the operator interface system is forced into training mode by setting a flag in the appropriate system's registry. In order to determine skill levels of operators and trainees, the system includes a test generation and scoring facility which allow on-line test development and administration of tests. Tests are scored automatically and scores can be kept in an operator file and can be used to inform the skills-based routing of incidents.

### Remote Access Mode

Remote access mode is a customer interface for operators dialing into the system from a remote location. In the exemplary embodiment, this may be accomplished using any of a number of remote access applications, or ultimately on a web site via the Internet. Remote access requires password identification and presents the remote operator with a subset of data which is generally related to their caseload, and a subset of the functions available to them when they are local operators.

The exemplary embodiment of the present invention uses a scalable, multi-system client/server architecture and a component object model. The operator interface system supports portability across geopolitical boundaries also, since all screen input allows for easy internationalization, either through the use of graphical labels or table/header defined variables. Therefore, the entire monitoring system and not just the operator interface system can be deployed in any environment which supports these architectural and implementation strategy choices. Scalability permits migration across a wide range of system sizes from small installations with a single server to a large, distributed network of servers for big installations. The architecture and implementation strategies of the exemplary embodiment ermit scalability simply by changing deployment strategies.

Reference is made to Appendix A, fully incorporated by reference herein as if fully set forth herein, for a detailed description of the exemplary embodiment's displays, their functionality, their use, and their navigation.

The multi-system architecture in which the current invention is intended to participate, combined with an implementation strategy embracing object model components, enables not only the logical separation of operator interface, rules-based data processing, and data capture but their physical and operational separation as well. These independent systems and components can potentially be written with different applications and deployed variously and separately. Further, this approach allows the independent data storage system to be any ODBC compliant database management system. These include MS FoxPro, MS Visual FoxPro, MS Access, SQL Server, Oracle, dBase and others.

The system of the exemplary embodiment provides the operator interface functionality for a system that monitors movements of individuals. Anyone skilled in the art will realize that, for example, the inventive concepts taught herein apply equally well to locating a population of individuals or objects (such as cars or boats). Because many varying and different embodiments may be made within the scope of the inventive concept herein taught, and because many modifications may be made in the embodiments herein detailed in accordance with the descriptive requirements of the law, it is to be understood that the details herein are to be interpreted as illustrative and not in a limiting sense.

Because many varying and different embodiments may be made within the scope of the inventive concepts herein taught, and because many modifications may be made in the embodiments herein detailed in accordance with the descriptive requirements of the law, it is to be understood that the details herein are to be interpreted as illustrative and not in a limiting sense.

## Claims

1. A data capture system which is a data producer system for a plurality of data consumer systems and which has a three-subsystem architecture for optimization of interoperability and task-specific adaptability, comprising:
a data acquisition subsystem acquiring data and storing said data in retreivable locations corresponding thereto;
a data normalization subsystem receiving and normalizing said data accoridng to a common protocol; and
a data communication subsystem communicating said normalized data to said consumer systems;
said data acquisition subsystem includes a plurality of distributed data source units, said data source units having a plurality of types and each said data source unit having one or more non-common interface protocols for producing data which includes indicia of the source of said data and the time of its acquisition;
wherein said data communication subsystem includes a means for communicating said normalized data to said plurality of consumer systems and receiving data capture requests from said plurality of consumer systems, said data collection requests to be communicated to and executed by one or more of said plurality of data source units.

2. The data capture system of claim 1 wherein said data acquisition subsystem includes a plurality of data collection ports for receiving data froth said plurality of distributed data source units.

3. The data capture system of claim 2 wherein said data normalization subsystem further comprises a processor interposed between said plurality of data collection ports and said data communication subsystem, for normalizing said received data to a common or normalized format.

4. The data capture system of claim 1 wherein said means for communicating is a plurality of communications ports interfaced with said plurality of consumer systems.

5. The data capture system of claim 1 wherein said means for communicating is a shared database accessible to both said data communication subsystem and said plurality of consumer systems.

## Patentansprüche

1. Datenerfassungssystem, welches ein Datenerzeugungssystem für eine Mehrzahl von Datenverbrauchersystemen ist, und eine Architektur mit drei Untersystemen zum Optimieren des Wechselbetriebs und der aufgabenspezifischen Anpassbarkeit hat, welches umfasst:
ein Datengewinnungs-Untersystem, das Daten gewinnt und die Daten in entsprechenden wiedergewinnbaren Orten speichert;
ein Daten-Normalisierungs-Untersystem, das Daten entsprechend einem gemeinsamen Protokoll empfängt und normalisiert; und
ein Daten-Kommunikations-Untersystem, das die normalisierten Daten an die Verbrauchersysteme kommuniziert;
wobei das Datengewinnungs-Untersystem eine Mehrzahl von verteilten Datenquelleneinheiten beinhaltet, wobei die Datenquelleneinheiten eine Mehrzahl von Arten haben und jede Datenquelleneinheit eine oder mehr nicht gemeinsame Schnittstellenprotokolle zum Erzeugen von Daten haben, die Indizien der Quelle der Daten und der Zeit ihrer Gewinnung beinhalten;
wobei das Datenkommunikations-Untersystem eine Einrichtung zum Kommunizieren der normalisierten Daten an die genannte Mehrzahl von Verbrauchersystemen und zum Empfangen von Datenerfassungsanforderungen von der genannten Mehrzahl der Verbrauchersysteme beinhaltet, wobei die Datensammelanforderungen an eine oder mehr der genannten Mehrzahl von Datenquelleneinheiten kommuniziert und von dieser/diesen ausgeführt werden sollen.

2. Datenerfassungssystem nach Anspruch 1, wobei das Datengewinnungs-Untersystem eine Mehrzahl von Datensammelports aufweist zum Empfangen von Daten von der genannten Mehrzahl von verteilten Datenquelleneinheiten her.

3. Datenerfassungssystem nach Anspruch 2, wobei das Datennormalisierungs-Untersystem weiterhin einen Prozessor aufweist, der zwischen der genannten Mehrzahl von Datensammelports und dem Datenkommunikations-Untersystem zwischengeschaltet ist, zum Normalisieren der empfangenen Daten in ein gewöhnliches oder normalisiertes Format.

4. Datenerfassungssystem nach Anspruch 1, wobei die Einrichtung zum Kommunizieren eine Mehrzahl von Kommunikationsports ist, die mit der genannten Mehrzahl von Verbrauchersystemen verbunden sind.

5. Datenerfassungssystem nach Anspruch 1, wobei die Einrichtung zum Kommunizieren eine gemeinsam genutzte Datenbank ist, auf die sowohl das Datenkommunikations-Untersystem als auch die genannte Mehrzahl von Verbrauchersystemen Zugriff hat.

## Revendications

1. Système de capture de données qui est un système producteur de données pour une pluralité de systèmes consommateurs de données et qui a une architecture à trois sous-systèmes pour l'optimisation de l'interopérabilité et de l'adaptabilité à des tâches spécifiques, comportant
un sous-système d'acquisition de données faisant l'acquisition de données et mémorisant lesdites données dans des emplacements accessibles leur correspondant,
un sous-système de normalisation de données recevant et normalisant lesdites données conformément à un protocole commun, et
un sous-système de communication de données communiquant lesdites données normalisées auxdits sous-systèmes consommateurs,
ledit sous-système d'acquisition de données incluant une pluralité d'unités de sources de données réparties, lesdites unités de sources de données ayant une pluralité de types et chaque unité de source de données ayant un ou plusieurs protocoles d'interface non-communs pour produire des données qui incluent l'indice de la source desdites données et l'instant de leur acquisition,
dans lequel ledit sous-système de communication de données inclut des moyens pour communiquer lesdites données normalisées à ladite pluralité de systèmes consommateurs et recevoir des demandes de capture de données en provenance de ladite pluralité de systèmes consommateurs, lesdites demandes de collecte de données étant destinées à être communiquées et exécutées par une ou plusieurs unités de ladite pluralité d'unités de sources de données.

2. Système de capture de données selon la revendication 1, dans lequel ledit sous-système d'acquisition de données inclut une pluralité de ports de collecte de données pour recevoir des données en provenance de ladite pluralité d'unités de sources de données réparties.

3. Système de capture de données selon la revendication 2, dans lequel ledit sous-système de normalisation de données comporte en outre un processeur interposé entre ladite pluralité de ports de collecte de données et ledit sous-système de communication de données, pour normaliser lesdites données reçues dans un format commun ou normalisé.

4. Système de capture de données selon la revendication 1, dans lequel lesdits moyens de communication sont une pluralité de ports de communication formant interface avec ladite pluralité de systèmes consommateurs.

5. Système de capture de données selon la revendication 1, dans lequel lesdits moyens de communication sont une base de données partagée accessible à la fois audit sous-système de communication de données et à ladite pluralité de systèmes consommateurs
